# EUROPEAN PATENT SPECIFICATION

(11) **EP 3 251 055 B1**
(45) Date of publication and mention of the grant of the patent: **18.11.2020**
(21) Application number: 16743005.7
(22) Date of filing: 28.01.2016
(51) Int. Cl.: G06F 21/62, G06F 21/82, G06K 9/00, G06K 9/62, G06F 3/041

(54) **INFORMATION PROCESSING APPARATUS AND PROGRAM**
INFORMATIONSVERARBEITUNGSVORRICHTUNG UND -PROGRAMM
APPAREIL ET PROGRAMME DE TRAITEMENT D'INFORMATIONS

(30) Priority: 30.01.2015 JP 2015017647
(43) Date of publication of application: 06.12.2017
(73) Proprietor: Ricoh Company, Ltd., Tokyo 143-8555 (JP)
(72) Inventor: KAWASAKI, Yuichi, Tokyo 143-8555 (JP); KASATANI, Kiyoshi, Tokyo 143-8555 (JP)
(74) Representative: SSM Sandmair
(86) International application number: PCT/JP2016/000447
(87) International publication number: WO 2016/121401

(56) References cited:
- JP-A- H0 850 631
- JP-A- H07 110 845
- JP-A- H07 110 845
- JP-A- 2004 102 412
- JP-A- 2008 158 753
- US-A1- 2007 188 823
- US-A1- 2014 145 974

## Description

### Technical Field

The disclosures herein generally relate to an information processing apparatus, and a program.

### Background Art

Related art interactive electronic whiteboards are widely used in conferences held by companies, educational institutions, and administrative organs. Such electronic whiteboards are generally designed to display background images on large displays, allowing users of the electronic whiteboards to handwrite characters, numbers, graphics, and the like on the large displays.

Such a large display of the interactive electronic whiteboard serves as both a display apparatus and an input apparatus, and users use a dedicated pen or their fingers to input coordinates into the large display. The electronic whiteboard is configured to connect coordinates in a chronological order to superimpose users' handwriting characters, numbers, and graphics on the background image, and the superimposed images are displayed on the display apparatus accordingly.

The electronic whiteboards are to save those handwritten characters, numbers, etc., as images as well as recognizing those characters, numbers, etc., to convert the recognized characters, numbers, etc., into text data. The text data converted from the recognized characters, numbers, etc., may require storage capacity less than storage capacity of the images, which facilitates reuse of characters, numbers, etc.

The recognition rate of the handwritten characters, however, does not necessarily achieve 100%. Hence, attempts have been made to formulate a technology to handle a false recognition rate of characters (e.g., Patent Document 1). Patent Document 1, for example, discloses a character processor apparatus having a candidate buffer to hold recognition candidates for characters in a document in order to reconvert the characters that have already been recognized.
Document US 2014/145974 describes that an information processing apparatus is capable of editing a document using a handwritten input by pen or finger, and that it may be possible to search a handwritten document based on the stroke data, to perform character recognition processing, and to capture a document written on a paper notebook in the past as a digital text.

### Citation List

### Patent Literature

[PTL 1] Japanese Patent Publication No. 3534469

### Summary of Invention

### Technical Problem

The character processor apparatus having a candidate buffer disclosed in Patent Document 1 is configured to store converting candidates that may be specified by pointers in the candidate buffer; however, the character processor apparatus may fail to store the converting candidates in storage media other than the candidate buffer. The converting candidates that have been first saved in a nonvolatile memory, such as a hard disk drive (HDD) or a solid state drive (SDD), as backup may fail to be converted into characters using the converting candidates.

### Solution to Problem

Accordingly, one object in embodiments of the present invention is to provide an information processing apparatus capable of storing handwritten information converting candidates to a desired recording medium that substantially obviate one or more problems caused by the limitations and disadvantages of the related art.

In accordance with an aspect of embodiments, an information processing apparatus having a display apparatus to display information includes a specified position detector configured to detect a specified position on a display surface displaying information; a visual information generator configured to generate visual information based on the specified position detected by the specified position detector; a symbol recognizer configured to recognize a symbol formed of one or more visual information items generated by the visual information generator, and determine recognition process candidates of the symbol; and a saving unit configured to save the symbol and the recognition process candidates as a file in a storage.

### Brief Description of Drawings

[fig. 1] Fig. 1 is an overall configuration diagram illustrating an example of an image processing system in accordance with an embodiment;
[fig.2]Fig. 2 is a hardware configuration diagram illustrating an example of an electronic whiteboard;
[fig.3]Fig. 3 is a functional block diagram illustrating an example of the electronic whiteboard;
[fig.4]Fig. 4 is a functional block diagram illustrating an example of a file processor;
[fig.5]Fig. 5 is a diagram illustrating examples of functional configurations of a communication controller and a server apparatus;
[fig.6]Fig. 6 is a schematic diagram illustrating an example of stroke array data;
[fig.7]Fig. 7 is a schematic diagram illustrating an example of coordinates array data;
[fig.8]Fig. 8 is a configuration diagram illustrating examples of image layers;
[fig.9]Fig. 9 is a sequence diagram illustrating an example of a process of the electronic whiteboard;
[fig. 10]Fig. 10 is a sequence diagram illustrating an example of a process of the electronic whiteboard;
[fig. 11]Fig. 11 is a flowchart illustrating a process of recognizing a symbol from coordinates of handwritten visual information performed by a stroke processor;
[fig.12A]Fig. 12A is a diagram illustrating an example of a symbol drawn on a display;
[fig. 12B]Fig. 12B is a diagram illustrating an example a recognized result of the drawn symbol displayed on the display;
[fig. 12C]Fig. 12C is a diagram illustrating an example of the recognized result and recognition candidates displayed on the display;
[fig. 12D]Fig. 12D is a diagram illustrating an example of a text selected from the recognition candidates displayed on the display;
[fig.13]Fig. 13 is a flowchart illustrating an example of a process in which the stroke processor reconverts the text into one of recognition process candidates;
[fig.14A]Fig. 14A is a flowchart illustrating an example of a process of storing page data in a page data storage performed by a page processor;
[fig.14B]Fig. 14B is a flowchart illustrating an example of a process of reading the page data performed by the page processor; and
[fig.15A]Fig. 15A is a diagram illustrating an example of serializing and deserializing processes;
[fig.15B]Fig. 15B is a diagram illustrating an example of a process of creating a PDF file separately from the serialized data; and
[fig.15C]Fig. 15C is a diagram illustrating an example of attaching the PDF file to the serialized data.

### Description of Embodiments

The following describes an embodiment of the present invention with reference to the accompanying drawings.

### DEFINITIONS

In the remainder of this disclosure and in the claims, the terminology or phrases are used as follows.
- An object is referred to herein as visual information that is formed by connecting one or more sets of coordinates and is displayed on a display. Examples of the object in the embodiments include text, a graphic, a stroke, and a background image.
- Text is referred to herein as visual information that may be handled as a code. Examples of text in the embodiments include symbols such as characters, numeric values, and special symbols (%, &, =, ∼, etc.,). Text may be converted into codes by code recognition (also called "character recognition"); however, text in the embodiments includes handwritten characters.
- A graphic is referred to herein as a graphic having a predetermined shape such as a circle or a square. The graphic may be converted into a code indicating a specific graphic determined by shape recognition, or may be recognized as a diagram formed of a straight line and curves.
- A stroke is referred to herein as an object not identified as text or a graphic.
- Page data are referred to herein as an object for one page displayed on a display. OUTLINE OF SYSTEM

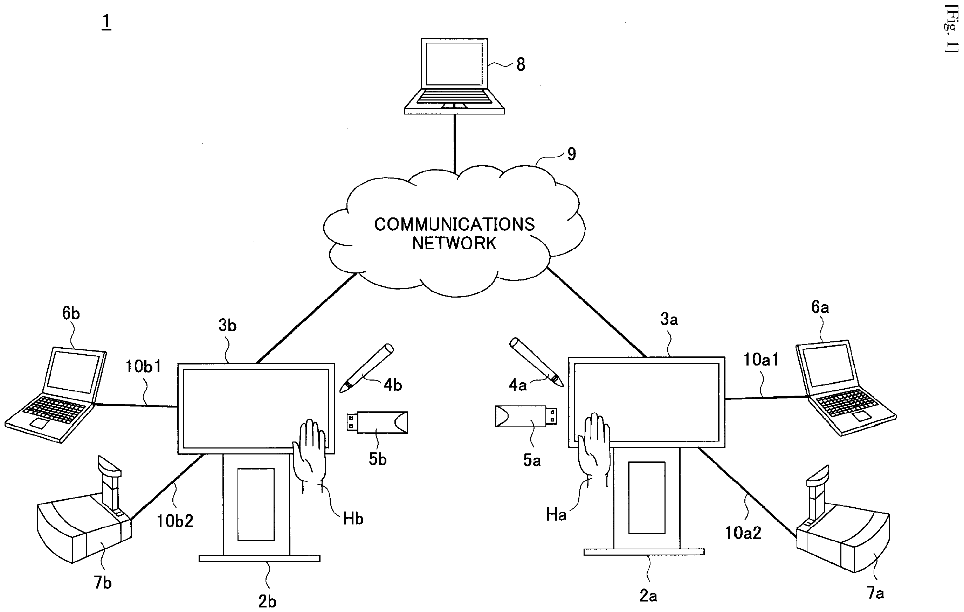

Fig. 1 is an overall configuration diagram of an image processing system of an embodiment. Fig. 1 illustrates only two electronic whiteboards 2a and 2b and the accompanying electronic pens 4a and 4b for simplifying illustration of the image processing system; the image processing system may employ three or more electronic whiteboards and the accompanying electronic pens. The electronic whiteboards 2a and 2b are placed in different locations.

Fig. 1 illustrates an image processing system 1 including two or more electronic whiteboards 2a and 2b, two or more electronic pens 4a and 4b, USB memories 5a and 5b, notebook personal computers (PCs) 6a and 6b, TV conference terminals (or video conference terminals) 7a and 7b, and a PC 8. The electronic whiteboards 2a and 2b are connected to the PC 8 via a communications network 9 to allow the electronic whiteboards 2a and 2b to communicate with the PC 8. The PC 8 is used for sharing a screen with the electronic whiteboards 2. The electronic whiteboards 2a and 2b have respective displays 3a and 3b. The display 3 (the displays 3a or 3b) is an example of a display apparatus having a display surface to display information. The electronic whiteboard 2a is configured to display an image on the display 3a. The image is drawn based on an event generated by allowing a pen-tip of the electronic pen 4a or a pen-tail of the electronic pen 4a to touch the display 3a. The electronic whiteboard 2a may change the image displayed on the display 3a based on an event (e.g., a gesture such as enlarging, reducing, or turning a page) generated by a user's hand Ha or the like, in addition to an event generated by the electronic pen 4a.

The electronic whiteboard 2a may be connected to a USB memory 5a to read an electronic file such as a PDF (portable document format) file from the USB memory 5a, or record an electronic file in the USB memory 5a. The electronic whiteboard 2a is connected to a notebook PC 6a via a cable 10a1. The cable 10a1 is capable of performing communications based on the standards including DisplayPort, DVI (Digital Visual Interface), HDMI(registered trademark)(High-Definition Multimedia Interface), and VGA (Video Graphics Array). The electronic whiteboard 2a detects the electronic pen 4a or the hand Ha that touches the display to generate an event, and transmits event information indicating the generated event to the notebook PC 6a, in a manner similar to events generated by an input device such as a mouse or keyboard.

The electronic whiteboard 2a is connected to a TV conference terminal 7a via a cable 10a2 capable of performing communications based on the above-described standards. Note that the notebook PC 6a and TV conference terminal 7a may perform communications with the electronic whiteboard 2a via radio communications in compliance with various types of radio communications protocols such as Bluetooth (registered trademark), or a wireless LAN.

Another location includes the electronic whiteboard 2b having the display 3b, the electronic pen 4b, the USB memory 5b, the notebook PC 6b, the TV conference terminal 7b, and the cables 10b1 and 10b2. The electronic whiteboard 2b may also change an image displayed on the display 3b based on an event generated by a user's hand Hb and the like.

The image drawn on the display 3a of the electronic whiteboard 2a in one location or a first location, may also be displayed on the display 3b of the electronic whiteboard 2b in another location or a second location. Likewise, an image drawn on the display 3b of the electronic whiteboard 2b in the second location may also be displayed on the display 3a of the electronic whiteboard 2a in the first location. The image processing system 1 according to the embodiment may perform a remote sharing process to allow the displays in the remote locations to share the same image; this is exceedingly useful for holding conferences between remote areas.

Note that in the following, any one of the electronic whiteboards may be referred to as the "electronic whiteboard 2". Any one of the displays may be referred to as the "display 3". Any one of the electronic pens may be referred to as the "electronic pen 4". Any one of the USB memories may be referred to as the "USB memory 5". Any one of the notebook PCs may be referred to as the "notebook PC 6". Any one of the TV conference terminals may be referred to as the "TV conference terminal 7". Any one of users' hands may be referred to as the "hand H". Any one of the cables may be referred to as the "cable 10".

The embodiment describes the electronic whiteboard as an example of an image processing apparatus; however, the image processing apparatus is not limited to the electronic whiteboard. Other examples of the image processing apparatus may include electronic signage (digital signage), a telestrator used in sports and weather broadcasts, and a remote medical image (video) diagnostic apparatus. The embodiment further describes the notebook PC 6 as an example of an information processing terminal; however, the information processing terminals are not limited to the electronic whiteboard. Other examples of the image processing apparatus may include terminals capable of supplying image frames such as a desktop PC, a tablet terminal PC, a wearable PC, a smartphone, a PDA (personal digital assistant), a digital camcorder, a digital still camera, and a game machine.

The communications network 9 includes the Internet, LANs (local area networks), and mobile telecommunications networks. The embodiment describes a USB memory as an example of the recording medium; however, the recording medium is not limited to the USB memory. Other examples of the recording medium include various types of recording media such as an SD card.

### HARDWARE CONFIGURATION OF ELECTRONIC WHITEBOARD

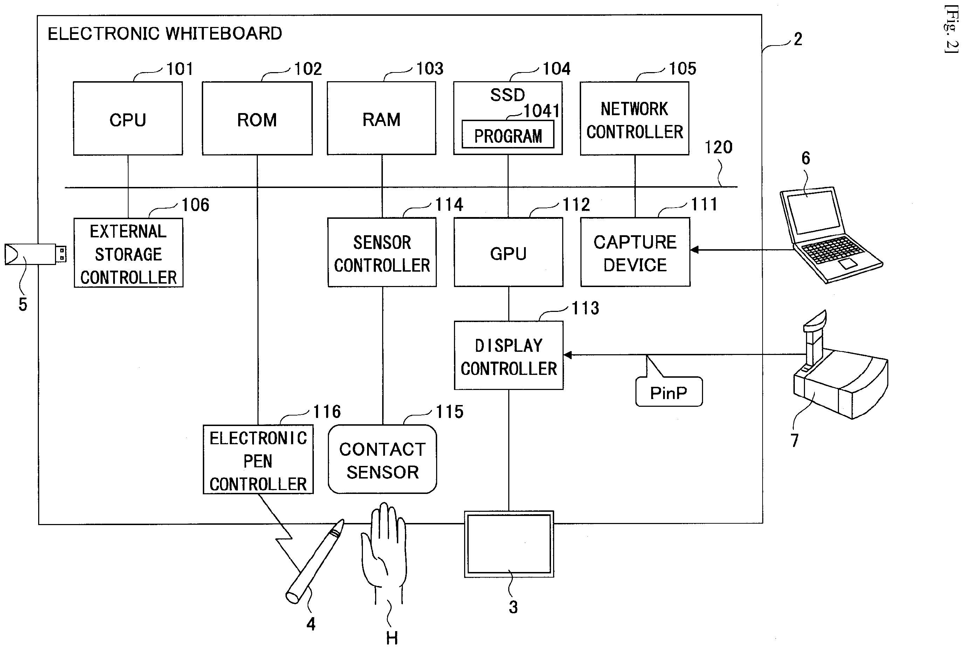

Next, a description is given, with reference to Fig. 2, of a hardware configuration of the electronic whiteboard of the embodiment. Fig. 2 is an example of a hardware configuration diagram illustrating an electronic whiteboard.

Fig. 2 illustrates the electronic whiteboard 2 that includes a CPU 101 configured to control an overall operation of the electronic whiteboard 2, a ROM 102 storing the programs for use in driving the CPU 101 such as IPL (initial program loader), a RAM 103 serving as a work area of the CPU 101, an SSD 104 storing a program 1041 for providing functions of the electronic whiteboard 2 or various types of data, a network controller 105 configured to control communications with the communications network 9, and an external storage controller 106 configured to control communications with the USB memory 5.

The electronic whiteboard 2 further includes a capture device 111 configured to display image information as still images or dynamic images on a display of the notebook PC 6, a GPU (graphics processing unit) 112 specialized in handling graphics, and a display controller 113 configured to control and manage a screen display for outputting an image from the GPU 112 into the display 3 or the TV conference terminal 7. Note that the capture device 111 may acquire image information of still images or dynamic images displayed on the display of the notebook PC 6 to output the acquired image information to the display controller 113.

The electronic whiteboard 2 further includes a contact sensor 115 configured to detect the electronic pen 4 or the user's hand Ha that has touched the display 3, and a sensor controller 114 configured to control processing of the contact sensor 115. The contact sensor 115 is configured to input or detect coordinates based on an infrared blocking detection system. The infrared blocking detection method of inputting or detecting coordinates includes causing two receiver-emitter devices disposed on the upper ends of the display 3 to emit infrared rays in directions parallel with the display 3, and receive light reflected in the same optical path by a reflective member disposed around the display 3. The contact sensor 115 images an infrared light blocked position at which infrared light is blocked by an object such as the electronic pen 4 or the hand H and outputs the image to the sensor controller 114. The sensor controller 114 is configured to specify a coordinates position (an example of a specified position) that is a contact position of a touched position of the object, based on the blocked position.

The contact sensor 115 is not limited to the infrared blocking detection system, and various types of detectors may be used; examples of such detectors include those used in a capacitive touchscreen panel configured to specify a contact position by detecting a change in electrostatic capacitance, a resistive touchscreen panel configured to specify a contact position by detecting a voltage change in two facing resistive films, and an electromagnetic touch panel configured to specify a contact position by detecting electromagnetic induction generated by causing a contact object to touch a display part.

The electronic whiteboard 2 further includes an electronic pen controller 116. The electronic pen controller 116 is configured to perform communications with the electronic pen 4 to detect whether a pen-tip or a pen-tail of the electronic pen 4 has touched the display 3 (detect the presence or absence of contact of the pen-tip or the pen-tail of the electronic pen 4). The electronic pen controller 116 may be configured to detect the presence or absence of contacts of other parts of the electronic pen 4 such as a part of the electronic pen 4 gripped by a user in addition to the presence or absence of contact of the pen-tip or the pen-tail of the electronic pen 4.

The electronic whiteboard 2 further includes a bus line 120 configured to electrically couple the CPU 101, the ROM 102, the RAM 103, the SSD 104, the network controller 105, the external storage controller 106, the capture device 111, the GPU 112, and the sensor controller 114 as illustrated in Fig. 2.

Note that the programs executed by the CPU 101 of the electronic whiteboard 2 may be distributed by being recorded on a computer-readable recording medium such as a CD-ROM or may be distributed by being downloaded from an information processing apparatus that distributes the program via the communications network 9.

### FUNCTIONAL CONFIGURATION OF ELECTRONIC WHITEBOARD

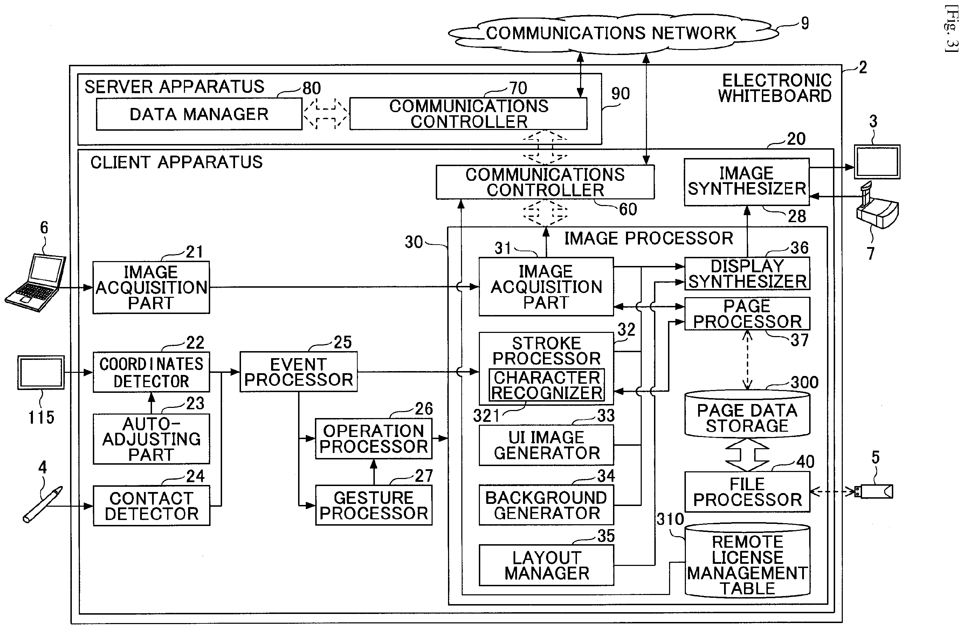

The following describes the functional configuration of the electronic whiteboard 2 with reference to Figs. 3 to 5. An overall functional configuration of the electronic whiteboard 2 is described first with reference to Fig. 3. Fig. 3 is a functional block diagram illustrating an example of the electronic whiteboard 2.

The electronic whiteboard 2 implements the functions illustrated in Fig. 3 by causing a CPU 101 illustrated in Fig. 2 to execute the program 1041 as well as controlling the hardware illustrated in Fig. 2. The electronic whiteboard 2 includes a client apparatus 20 and a server apparatus 90. That is, the client apparatus 20 and the server apparatus 90 are included in an enclosure of one electronic whiteboard 2. The following describes the functional configurations of the client apparatus 20 and the server apparatus 90 in this order.

### FUNCTIONAL CONFIGURATION OF CLIENT APPARATUS 20

The following describes the functional configuration of the client apparatus 20 by referring mainly to Figs. 3 to 5. The client apparatus 20 includes an image acquisition part 21, a coordinates detector 22, an automatic adjustment part 23, a contact detector 24, an event processor 25, an operation processor 26, a gesture processor 27, an image synthesizer 28, an image processor 30, and a communications controller 60.

The image acquisition part 21 is configured to acquire output images of image output apparatuses such as the notebook PC 6 connected to the cable 10. Specifically, the image acquisition part 21 receives an image signal from an image output apparatus (notebook PC6), analyzes the received image signal to obtain image frame resolution of the displayed image of the image output apparatus formed of the image signal, and image information such as update frequency of the image frame, and transmit the obtained image frame resolution and the image information to the image acquisition part 31.

The coordinates detector 22 is configured to detect coordinates positions of an event on the display 3 generated by a user. The coordinates detector 22 is also configured to detect an area touched by the user.

The auto-adjusting part 23 is configured to automatically adjust the coordinates detector 22 at the activation of the electronic whiteboard 2. The activation of the electronic whiteboard 2 includes turning ON the power of the electronic whiteboard 2, or resuming from the power saving mode.

The contact detector 24 is configured to detect an event generated by a user. Examples of the event include a touch on the display 3 by a pen-tip of the electronic pen 4, and a touch on the display 3 by a pen-tail of the electronic pen 4.

The event processor 25 is configured to sort the event into one of the stroke drawing (object drawing), a UI operation, and a gesture operation based on the coordinates position of the event detected by the coordinates detector 22 and a result detected by the contact detector 24. Note that the stroke drawing indicates a drawing plotted by the user with the electronic pen 4 or by the user's hand H. The UI operation indicates a UI image operation (later-described UI image (A)) performed by the user. Examples of the UI operation include setting color, and setting line width of the lines of the drawing to be plotted by the electronic pen 4. The gesture operation indicates a gesture performed by the user on the display 3. Examples of the gesture operation include the user's moving the user's hand H while the user's hand H is in contact with the display 3. The user performs the gesture operation to enlarge or reduce images, change a display area, or switching pages.

The operation processor 26 is configured to execute various types of operations in accordance with the event generating UI elements from the UI operations determined by the event processor 25. Examples of the UI elements include a button, a list, a check box, and a text box.

The gesture processor 27 is configured to execute an operation corresponding to the element determined by the event processor 25 as the gesture operation.

The image synthesizer 28 is configured to display a synthesized image synthesized by the later-described display synthesizer 36 as video on the display 3. The image synthesizer 28 is also configured to attach the video transmitted from a different image output apparatus (TV conference terminal 7) to the video from the image output apparatus (e.g., notebook PC 6) in a picture-in-picture (PiP) form, and display the picture-in-picture video on the display 3. The image synthesizer 28 is further configured to switch a partial display of the picture-in-picture video displayed on a part of the display 3 to a full screen display of the video on the display 3.

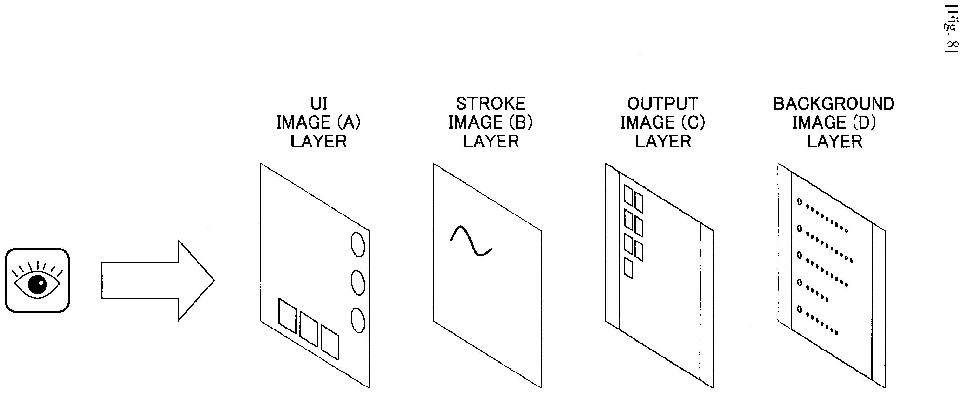

The following illustrates the image processor 30. The image processor 30 is configured to synthesize the layers of images such as those illustrated in Fig. 8. Fig. 8 is a configuration diagram illustrating examples of image layers. The image processor 30 includes an image acquisition part 31, a stroke processor 32, a UI image generator 33, a background generator 34, a layout manager 35, a display synthesizer 36, a page processor 37, a file processor 40, a page data storage 300, and a remote license management table 310.

The image acquisition part 31 is configured to acquire respective frames from the video acquired from the image acquisition part 21 as an image. The acquired image corresponds to an output image (C) from the image output apparatus (notebook PC 6) illustrated in Fig. 8.

The stroke processor 32 is configured to draw an image based on the strokes of the touch of the pen-tip of the electronic pen 4, the touch of the pen-tail of the electronic pen 4, or the touch of the user's hand H detected by the event processor 25, and delete and edit the drawn image. The image drawn by the strokes corresponds to a stroke image (B) illustrated in Fig. 8. For the image drawn based on the strokes, deleted and edited results of the drawn image may be stored as later-described operation data in the later-described operation data storage 840.

The stroke processor 32 includes a character recognizer 321 . The character recognizer 321 is configured to analyze coordinates data acquired by the event processor 25 to identify the coordinates data as text (a symbol such as a character, a numerical value, and a special symbol), a graphic such as circle or square, or a stroke. The coordinate data identified as text indicates that the hand written visual information is recognized as a symbol. The recognition of symbols may include various types of systems such as an extended cellular features extraction system, a peripheral direction contributivity features extraction system, and a weighted direction index histogram extraction system, any of which may be employed in the present embodiment. Each of the above-described systems has standard feature patterns of the symbols; a symbol having the pattern closest to (most analogous to) the pattern of the handwritten text feature is recognized as text.

The character recognizer 321 is configured to save each of the symbols in association with at least one of recognition process candidates (an example of a recognition candidate) when recognizing each symbol. In the recognition of characters (symbols), the text having the highest matching rate with the handwritten text may be specified as a recognized result based on the analogous level of the pattern. The text other than that having the highest matching rate may become a recognition process candidate. Note that the embodiment allows the recognition process candidates to include the text having the highest matching rate for facilitating the recognition process. The recognition process candidates may be extracted in a range from the lowest matching rate to the highest matching rate, which are predetermined in descending order starting from the highest matching rate. The symbols and the recognition process candidates are output to the page processor 37.

The UI image generator 33 is configured to generate a UI (user interface) image preset in the electronic whiteboard 2. The UI image corresponds to the UI image (A) illustrated in Fig. 8.

The background generator 34 is configured to generate a background image displayed on the display 3. The background image corresponds to the background image (D) illustrated in Fig. 8. The background image patterns include plain, grids, and the like.

The layout manager 35 is configured to manage layout information indicating layouts of the images output from the image acquisition part 31, the stroke processor 32, the UI image generator 33, and the background generator 34, and output the managed layout information to the display synthesizer 36. This configuration enables the layout manager 35 to instruct the display synthesizer 36 to display the output image (C) and the stroke image (B) at a position of the UI image (A) and a position of the background image (D), or to instruct the display synthesizer 36 not to display the output image (C) and the stroke image (B).

The display synthesizer 36 is configured to lay out the images output from the image acquisition part 31, the stroke processor 32, the UI image generator 33, and the background generator 34 based on the layout information output from the layout manager 35.

The page processor 37 is configured to record text including the recognition process candidates, graphics, strokes, and the background image (D) as page data of one page in the page data storage 300 (an example of a storage). The text including the recognition process candidates, the graphics and the strokes correspond to the stroke image (B). The page processor 37 is also configured to redisplay the recorded pages to reedit the strokes. The page processor 37 is further configured to delete the pages, or copy the pages.

The display synthesizer 36 is configured to synthesize the output image (C) from the image acquisition part 31, the stroke image (B) from the stroke processor 32, the UI image (A) from the UI image generator 33, and the background image (D) from the background generator 34 in accordance with the layout specified by the layout manager 35. The images are thus layered in the order of the UI image (A), the stroke image (B), the output image (C), and the background image (D) to allow the user to see the superimposed images as illustrated in Fig. 8.

The display synthesizer 36 may also be configured to switch the output image (C) and the background image (D) to synthesize the switched results. For example, when the cable 10 connecting between the electronic whiteboard 2 and the image output apparatus (e.g., the notebook PC 6) is removed, the layout manager 35 may specify the output image (C) to be removed from the images subject to synthesis. The display synthesizer 36 is further configured to enlarge the synthesized image, reduce the size of the displayed image, and move the displayed area of the image.

The page data storage 300 is configured to store page data depicted in the following Table 1. Table 1 schematically illustrates the page data. The page data correspond to one page of data (text, graphics, strokes, and background image) displayed on the display 3. The following illustrates contents of the page data.

**[Table 1]**

| **PAGE DATA ID** | **START TIME** | **END TIME** | **STROKE ARRAY DATA ID** | **MEDIUM DATA ID** |
|---|---|---|---|---|
| **p001** | **20130610102434** | **20130610102802** | **st001** | **m001** |
| **p002** | **20130610102815** | **20130610103225** | **st002** | **m002** |
| **p003** | **20130610103545** | **20130610104233** | **st003** | **m003** |
| **⋮** | **⋮** | **⋮** | **⋮** | **⋮** |

Each of the page data include a page data ID for identifying the page, a start time indicating a time at which the page starts being displayed, an end time indicating a time at which the content of the page is no longer rewritten by the strokes or gestures, a stroke array table ID for identifying stroke array data generated by the strokes of the electronic pen 4 or the user's hand H, and a medium data ID for identifying medium data that are stored in association with one another. Each of the IDs including those described above may be an example of identification information.

Note that the medium data are image data displayed on the display 3 when the page data are stored. For example, when the background image (D), and the stroke image (B) are displayed on the display 3, the medium data indicate both the background image (D) and the stroke image (B). Further, when the background image (D) is not displayed on the display 3, and the stroke image (B) alone is displayed on the display 3, the medium data indicate the stroke image (B) alone.

When the user draws the letter "S" with the electronic pen 4, the user draws one letter "S" with one stroke. Hence, the page data may indicate one letter "S" with one stroke (the number of the later-described stroke data IDs is one). However, when the user draws the letter "T" with the electronic pen 4, the user draws one letter "T" with two strokes. Hence, the page data may indicate one letter "T" with two strokes (the number of the later-described stroke data IDs is two).

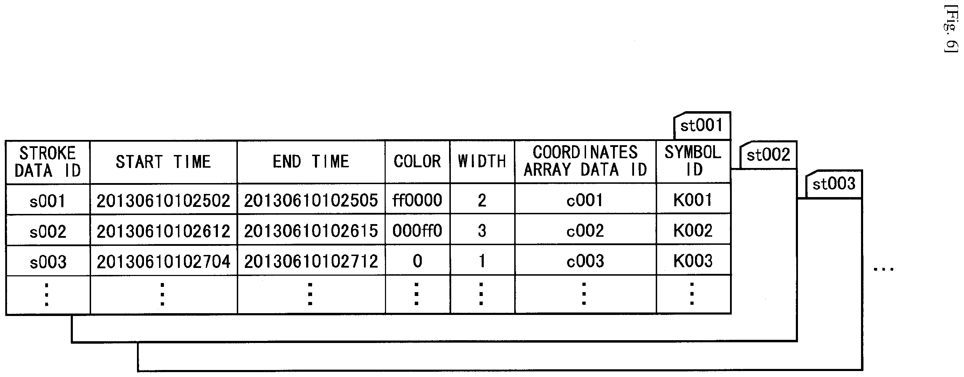

Fig. 6 is a schematic diagram illustrating an example of stroke array data. The stroke array data include detailed information such as those illustrated Fig. 6. One stroke array data item includes two or more stroke data items. One stroke data item indicates one stroke from pen-down to pen-up. The stroke data item includes a stroke data ID for identifying each stroke data item, a start time indicating a time at which a user starts writing one stroke item, an end time indicating a time at which the user ends writing the stroke item, the color of the stroke item, the width of the stroke item, a coordinates array data ID for identifying an array of points passed through when the stroke item is drawn, and a symbol ID of a symbol identified by the coordinates. The symbol ID indicates identification information for uniquely identifying a symbol within data of one page. For example, when a user handwrites a symbol "S" with one stroke, one stroke data ID is associated with one symbol ID. When a user handwrites a symbol "T" with two strokes, two stroke data IDs are associated with one symbol ID.

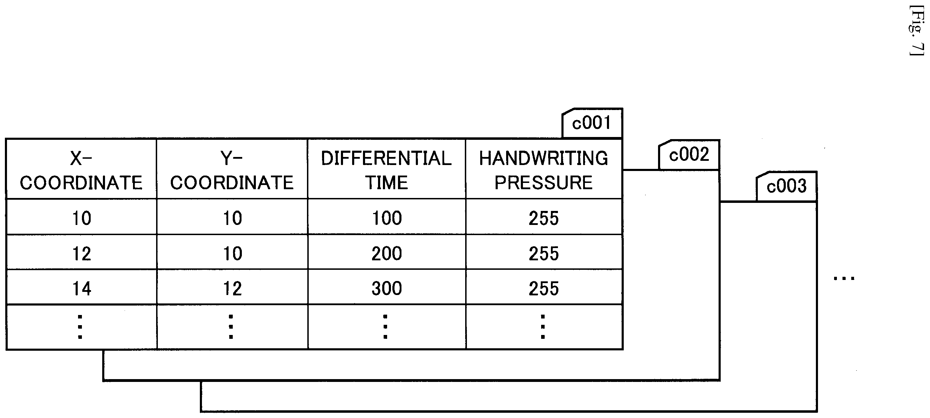

The coordinates array data specified by the coordinates array data ID indicate detailed information as illustrated in Fig. 7. Fig. 7 is a schematic diagram illustrating an example of coordinates array data. As illustrated in Fig. 7, the coordinates array data include various types of information, including one point (an X coordinate and a Y coordinate) on the display 3, the differential time (ms) from the start time at which the user's pen/finger drawing the stroke has passed this point, and a pen pressure of the electronic pen 4 at this point. The coordinates array data item specified by the stroke data ID indicated in Fig. 7 represents the collection of points illustrated in Fig. 8. When a user draws an letter "S" with one stroke of the electronic pen 4, the intact "S" is plotted by multiple points passed by the electronic pen 4 on the display 3.

**[Table 2]**

| **SYMBOL ID** | **TEXT** | **RECOGNITION PROCESS CANDIDATE** | | | | |
|---|---|---|---|---|---|---|
| **K001** | 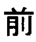 | 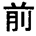 | 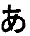 | 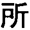 | 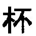 | 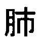 |
| **K002** | 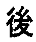 | 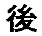 | 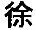 | 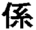 | 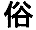 | 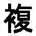 |
| **⋮** | **⋮** | **⋮** | **⋮** | **⋮** | **⋮** | **⋮** |

Table 2 schematically illustrates symbol data. The symbol data include a symbol ID for specifying a symbol, text converted from one or more handwritten strokes, and one or more recognition process candidates other than the text. The page data are associated with the symbol data, which enable the user to select text from the recognition process candidates when the page is displayed on the display 3.

**[Table 3]**

| **MEDIUM DATA ID** | **DATA TYPE** | **RECORD TIME** | **X COORDINATE** | **Y COORDINATE** | **WIDTH** | **HEIGHT** | **IMAGE DATA** |
|---|---|---|---|---|---|---|---|
| **m001** | **IMAGE** | **20130610103432** | **0** | **0** | **1920** | **1080** | **abc.jpg** |
| **m002** | **IMAGE** | **20130610105402** | **277** | **156** | **1366** | **768** | **bcd.jpg** |
| **m003** | **IMAGE** | **20130610105017** | **277** | **156** | **1366** | **768** | **cde.jpg** |
| **⋮** | **⋮** | **⋮** | **⋮** | **⋮** | **⋮** | **⋮** | **⋮** |

The following illustrates medium data with reference to Table 3. Table 3 schematically illustrates medium data. The medium data include a medium data ID for identifying each medium data set, data type indicating a type of medium data, record time at which the medium data are recorded, an X coordinate and a Y coordinate of coordinates at an upper left corner of the medium data, the width and the height of the medium data, and image data indicating a file of the medium data.

The subsequent illustration is given by referring back to Fig. 3. A remote license management table 310 is configured to manage license data necessary for executing a remote sharing process. The remote sharing process indicates a process in which the electronic whiteboard 2a in the first location shares an image with the electronic whiteboard 2b in the second location and the displays 3a and 3b.

**[Table 4]**

| **PRODUCT ID** | **LICENSE ID** | **EXPIRATION DATE** |
|---|---|---|
| **1001** | **12345678abcdefgh** | **2012/12/31** |
| **1001** | **4321 dcba8765hgfe** | **-** |
| **⋮** | **⋮** | **⋮** |

Table 4 schematically illustrates the remote license management table 310. The remote license management table 310 includes a product ID of the electronic whiteboard 2, a license ID for use in authentication, and the expiration date of the license.

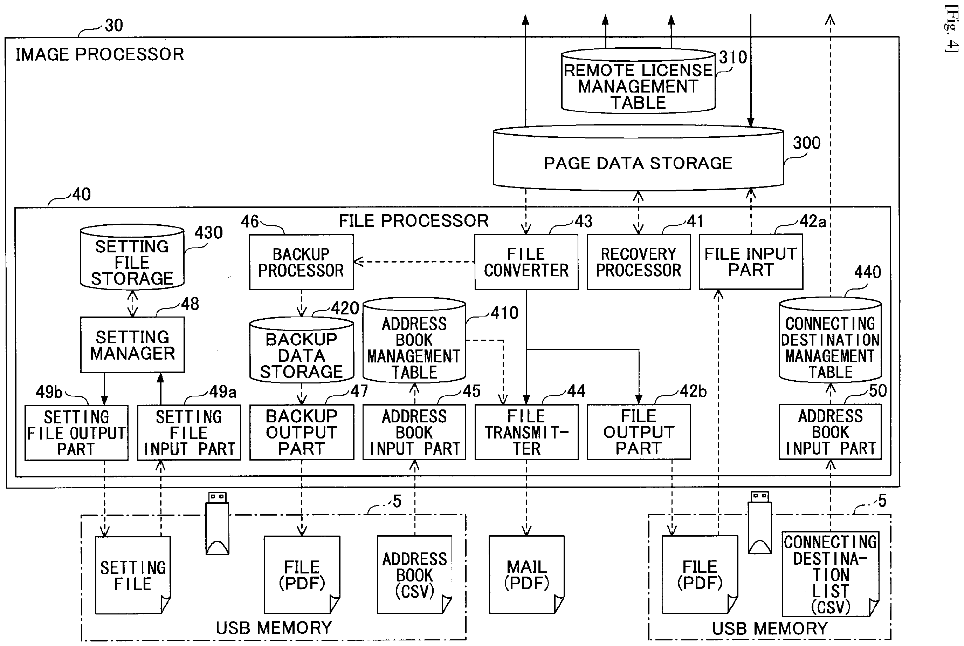

The following illustrates a functional configuration of a file processor 40 in Fig. 3 with reference to Fig. 4. Fig. 4 is an example of a functional block diagram illustrating the file processor 40. In the following, the electronic whiteboard 2 that initially starts the remote sharing process is called a "host apparatus", and the electronic whiteboard 2 that participates in the already started remote sharing process is called a "participation apparatus".

The file processor 40 includes a recovery processor 41, a file input part 42a, a file output part 42b, a file converter 43, a file transmitter 44, an address book input part 45, a backup processor 46, a backup output part 47, a setting manager 48, a setting file input part 49a, and a setting file output part 49b. The file processor 40 further include an address book management table 410, a backup data storage 420, a setting file storage 430, and a connecting destination management table 440.

The recovery processor 41 is configured to detect abnormal termination after the electronic whiteboard 2 abnormally terminates its operation, and restore unsaved page data.

The file input part 42a is configured to read a PDF file from the USB memory 5, and acquire each of the pages as page data.

The file converter 43 is configured to convert the page data stored in the page data storage 300 into a file in a PDF format.

The file output part 42b is configured to record the PDF file output by the file converter 43 in the USB memory 5.

The file transmitter 44 is configured to attach the PDF file generated by the file converter 43 to an electronic mail and transmit the PDF file attached electronic mail. The transmission destination of the electronic mail with the PDF file attached is determined by causing the display synthesizer 36 to display the contents of the address book management table 410 on the display 3, and allowing the file transmitter 44 to receive the destination (address) selected by the user. The file transmitter 44 may alternatively receive an email address input by the user as the destination (address).

**[Table 5]**

| **NAME** | **MAIL ADDRESS** |
|---|---|
| **TARO** | **taro@alpha.co.jp** |
| **HANAKO** | **hanako@beta.co.jp** |
| **-** | **jiro@gamma.co.jp** |
| **⋮** | **⋮** |

Table 5 illustrates an example of the address book management table 410. The address book management table 410 is configured to manage names of the destinations in association with email addresses of the destinations.

Referring back to Fig. 4, the address book input part 45 is configured to read a list file of the email addresses from the USB memory 5, and manage the read list file in the address book management table 410.

The backup processor 46 is configured to store the files output by the file output part 42b, and the files transmitted by the file transmitter 44 in the backup data storage 420 to back up these files. Note that the backup process is not performed when the user does not enable the backup setting. The backup data may be stored in the PDF format as illustrated in Table 6. Fig. 6 illustrates an example of the backup data.

**[Table 6]**

| |
|---|
| **iwb_20130610104423.pdf** |
| **iwb_20130625152245.pdf** |
| **iwb_20130628113418.pdf** |
| **⋮** |

The backup output part 47 is configured to store the backup files in the USB memory 5. Storing the backup files in the USB memory 5 needs a password.

The setting manager 48 is configured to manage various settings of the electronic whiteboard 2. Examples of such various settings include network settings, date and time settings, regional or language settings, mail server settings, connecting destination list settings, and settings relating to the backup. Note that examples of the network setting include an IP address setting for the electronic whiteboard 2, a net mask setting, a default gateway setting, or a DNS (Domain Name System) setting.

The setting file output part 49b is configured to record various settings of the electronic whiteboard 2 in the USB memory 5 as setting files. Note that the setting files are encrypted for security reasons; the user is thus unable to see the contents of the setting files.

The setting file input part 49a is configured to read the setting files stored in the USB memory 5, and reflect setting information to various settings of the electronic whiteboard 2.

The address book input part 50 is configured to read a list file of the IP addresses of the connecting destinations subject to the remote sharing process from the USB memory 5, and manage the read list file in the connecting destination management table 440 illustrated in Table 7.

**[Table 7]**

| **NAME** | **IP ADDRESS** |
|---|---|
| **CONFERENCE ROOM 1** | **192.0.0.1** |
| **CONFERENCE ROOM 2** | **192.0.0.2** |
| **-** | **192.0.0.3** |
| **⋮** | **⋮** |

Table 7 schematically illustrates the connecting destination management table 440. The connecting destination management table 440 is used for reducing time-consuming processes performed by the user of the participation apparatus of the electronic whiteboard 2. Specifically, when the electronic whiteboard 2 is the participation apparatus about to participate in the remote sharing process, the user of the participation apparatus needs to perform the time-consuming process of inputting the IP address of the host apparatus of the electronic whiteboard 2. The connecting destination management table 440 is configured to manage the IP addresses of the electronic whiteboards 2 in advance in order to omit such a time-consuming process. The connecting destination management table 440 provides names of the locations of the electronic whiteboards 2 capable of participating as the host apparatuses in association with the IP addresses of the electronic whiteboards 2 as the host apparatuses. Note that the connecting destination management table 440 may be omitted. However, in such a case, the users of the participation apparatuses may need to obtain the IP address of the electronic whiteboard 2 serving as the host apparatus from the user of the host apparatus by telephone, email, or the like.

### FUNCTIONAL CONFIGURATION OF COMMUNICATIONS CONTROLLER 60

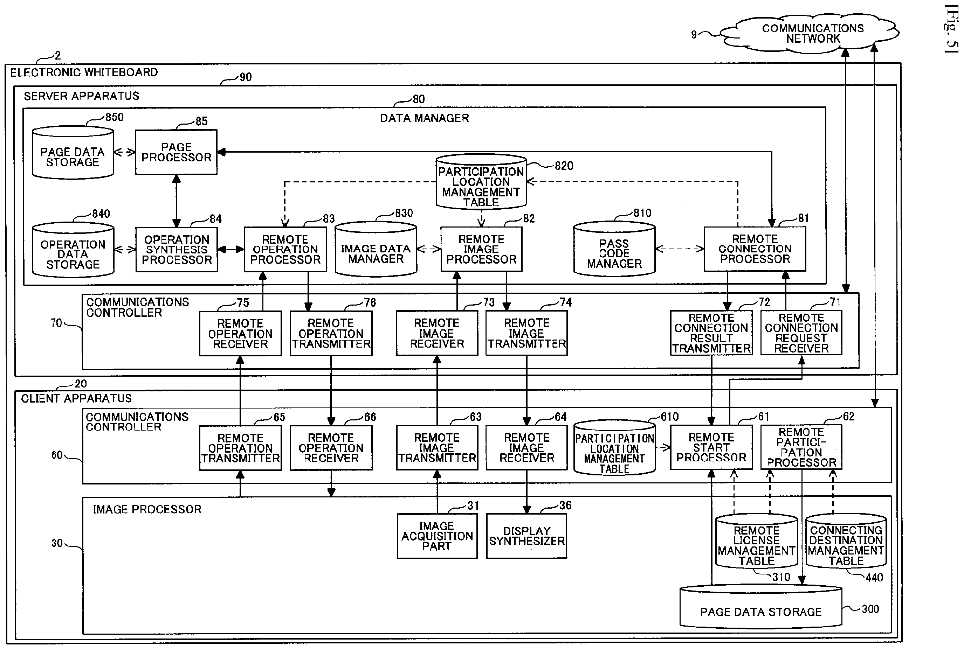

The following describes the functional configuration of the communications controller 60 with reference to Fig. 5. Fig. 5 is a diagram illustrating examples of functional configurations of the communications controller 60 and a server apparatus 90. The communications controller 60 is configured to control the communications with another electronic whiteboard 2 (also referred to as a "second electronic whiteboard 2", or a "different electronic whiteboard 2"), or control the communications with the communications controller 70 via the communications network 9. The communications controller 60 includes a remote process start processor 61, a remote participation processor 62, a remote image transmitter 63, a remote image receiver 64, a remote operation transmitter 65, a remote operation receiver 66, and a participation location management table 610.

Of these components, the remote process start processor 61 is configured to transmit a request for starting a new remote sharing process to the server apparatus 90 of the electronic whiteboard 2 within the same enclosure, and to receive a result of the request from the server apparatus 90. In this case, the remote process start processor 61 is configured to refer to the remote license management table 310, and transmit a request for starting the remote sharing process to the server apparatus 90 when the remote license management table 310 manages the license information (product ID, license ID, and expiration data). When the remote license management table 310 does not manage the license information, the remote process start processor 61 is unable to transmit the request for starting the remote sharing process.

The remote process start processor 61 is also configured to refer to the participation location management table 610. The participation location management table 610 is configured to manage the electronic whiteboards serving as the participant apparatuses that are currently participating in the remote sharing process when the electronic whiteboard 2 is the host apparatus. The participation location management table 610 is configured to manage names of the locations of the electronic whiteboards 2 currently participating in the remote sharing process in association with the IP addresses of these electronic whiteboards 2 as illustrated in Table 8. Table 8 illustrates an example of the participation location management table 610.

**[Table 8]**

| NAME | IP ADDRESS |
|---|---|
| CONFERENCE ROOM 1 | 192.0.0.1 |
| CONFERENCE ROOM 2 | 192.0.0.2 |
| - | 192.0.0.8 |
| ⋮ | ⋮ |

The remote participation processor 62 is configured to transmit a request for participating in the remote sharing process to the remote connection request receiver 71 in the server apparatus 90 of the electronic whiteboard 2 serving as the host apparatus that has already started the remote sharing process via the communications network 9. In this case, the remote participation processor 62 is also configured to refer to the remote license management table 310. When the remote participation processor 62 is to participate in the already started remote sharing process, the remote participation processor 62 refers to the connecting destination management table 440 to acquire the IP address of the electronic whiteboard 2 serving as the host apparatus (participation destination). Note that alternatively, the user may be input the IP address of the electronic whiteboard 2 serving as the participation destination without referring to the remote participation processor 62.

The remote image transmitter 63 is configured to transmit the output image (C) received from the image acquisition part 21 via the image acquisition part 31 to the server apparatus 90.

The remote image receiver 64 is configured to receive the image data from the image output apparatus connected to the second electronic whiteboard 2, and output the received image data to the display synthesizer 36 to enable the remote sharing process.

The remote operation transmitter 65 is configured to transmit various operation data necessary for the remote sharing process to the server apparatus 90. Examples of the various operation data include data relating to adding a stroke, deleting a stroke, editing a stroke (enlarge, reduce, and move), storing page data, creating page data, copying page data, deleting page data, and switching the displayed pages. The remote operation receiver 66 is configured to receive the operation data input by the second electronic whiteboard 2 from the server apparatus 90, and output the received operation data to the image processor 30, thereby performing the remote sharing process.

### FUNCTIONAL CONFIGURATION OF SERVER APPARATUS

The following describes the functional configuration of the server apparatus 90 with reference to Fig. 5. The server apparatus 90 is disposed in each of the electronic whiteboards 2. The server apparatus 90 may perform a server role in any of the electronic whiteboards 2. The server apparatus 90 includes the communications controller 70 and the data manager 80.

### FUNCTIONAL CONFIGURATION OF COMMUNICATIONS CONTROLLER 70

The following illustrates a functional configuration of the communications controller 70. The communications controller 70 is configured to control communications with the communications controller 60 in the client apparatus 20 within the same electronic whiteboard 2, and communications with the communications controller 60 in the client apparatus 20 in the different electronic whiteboard 2. The data manager 80 is configured to manage operation data and image data.

The communications controller 70 specifically includes a remote connection request receiver 71, a remote connection result transmitter 72, a remote image receiver 73, a remote image transmitter 74, a remote operation receiver 75, and a remote operation transmitter 76.

Of the above components, the remote connection request receiver 71 is configured to receive a request to start the remote sharing process from the remote process start processor 61 via the communications network 9, and receive a request to participate in the remote sharing process (or a participation request) from the remote participation processor 62 via the communications network 9.

The remote connection result transmitter 72 is configured to transmit a result of the request to start the remote sharing process to the remote process start processor 61 via the communications network 9, and transmit request to participate in the remote sharing process to the remote participation processor 62 via the communications network 9.

The remote image receiver 73 is configured to receive the image data (the output image (C) data) from the remote image transmitter 63, and transmit the received image data to the later-described remote image processor 82. The remote image transmitter 74 is configured to receive the image data from the remote image processor 82, and transmit the received image data to the remote image receiver 64.

The remote operation receiver 75 is configured to receive various types of operation data from the remote operation transmitter 65, and transmit the received various types of operation data to the later-described remote operation processor 83. The remote image transmitter 76 is configured to receive the operation data from the remote operation processor 83, and transmit the received operation data to the remote operation receiver 66.

### FUNCTIONAL CONFIGURATION OF DATA MANAGER 80

The following illustrates a functional configuration of the data manager 80. The data manager 80 includes a remote operation connection processor 81, a remote image processor 82, a remote operation processor 83, an operation synthesis processor 84, and a page processor 85. The data manager 80 further includes a pass code manager 810, a participation location management table 820, an image data management table 830, an operation data storage 840, and a page data storage 850.

Of these components, the remote operation connection processor 81 is configured to start the remote sharing process and end the remote sharing process. The remote operation connection processor 81 is also configured to verify the presence or the absence of the license, or whether the license is still within the valid period, based on the license information received together with the request to start the remote sharing process from the remote process start processor 61, and the license information received together with the request to participate in the remote sharing process from the remote participation processor 62. The remote operation connection processor 81 is further configured to verify whether the number of participation requests from the second electronic whiteboards 2 as client apparatuses exceeds a predetermined allowable number of participants.

The remote operation connection processor 81 is further configured to determine whether the passcode transmitted together with the request to participate in the remote sharing process from each of the second electronic whiteboards 2 is the same as that of a corresponding one of the second electronic whiteboards 2 managed by the pass code manager 810, and then, when the two passcodes match, authorize the corresponding second electronic whiteboard 2 to participate in the remote sharing process. Note that the passcode is issued by the remote operation connection processor 81 every time a new remote sharing process starts. This pass code is assigned by the user of the electronic whiteboard 2 serving as the host apparatus, by telephone, email, or the like, to the users of the electronic whiteboards 2 serving as the participation apparatuses desired to participate in the remote sharing process. The users of the electronic whiteboards 2 as the participation apparatuses desired to participate in the remote sharing process are authorized to participate in the remote sharing process by their entering the respective codes in their electronic whiteboards 2. Note that by taking priority of the users' usability over security, the remote operation connection processor 81 may verify license condition alone and omit the passcode verification.

The remote operation connection processor 81 is further configured to store, in the participation location management table 820 of the server apparatus 90, participation location information included in the participation request transmitted via the communications network 9 from the remote participation processor 62 of each electronic whiteboard 2 serving as the participation apparatus. In the electronic whiteboard 2 serving as the host apparatus, the client apparatus 20 and the server apparatus 90 both manage the same participation location management tables (610, 820) having the same contents. The remote operation connection processor 81 is further configured to read remote location information stored in the participation location management table 820, and transmit the read remote location information to the remote process start processor 61 of the electronic whiteboard 2 serving as the server apparatus via the communications network 9.

The remote image processor 82 is configured to receive the image data (the output image (C)) from the image output apparatus (e.g., the notebook PC 6) connected to the client apparatus of each of the electronic whiteboards 2 (including the client apparatus of the own electronic whiteboard 2 serving as the host apparatus) currently performing the remote sharing process, and determine a display order of images subject to the remote sharing process in an ascending order of time (chronological order) at which the images have reached the server apparatus 90 of the own electronic whiteboard 2 serving as the host apparatus. The remote image processor 82 is further configured to refer to the participation location management table 820, and transmit, via the communications controller 70 (the remote image transmitter 74), the image data items in the determined order to the client apparatuses 20 of all the electronic whiteboards 2 (including the client apparatus 20 of the own electronic whiteboard 2 serving as the host apparatus) currently participating in the remote sharing process.

The remote image processor 82 is configured to receive various types of operation data (e.g., the stroke image (B)) such as the stroke image and the like drawn in the client apparatuses 20 of the electronic whiteboards 2 (including the client apparatus 20 of the own electronic whiteboard 2 serving as the host apparatus) currently performing the remote sharing process, and determine the display order of the images subject to the remote sharing process in the ascending order of time (chronological order) at which the images have reached the server apparatus 90 of the own electronic whiteboard 2 serving as the host apparatus. Note that various types of operation data are the same as those already described above. The remote operation processor 83 is further configured to refer to the participation location management table 820, and transmit the operation data to the client apparatuses 20 of all the electronic whiteboards 2 (including the client apparatus 20 of the own electronic whiteboard 2 serving as the host apparatus) currently performing the remote sharing process.

The operation synthesis processor 84 is configured to synthesize the operation data of each electronic whiteboard 2 output from the remote operation processor 83, and store a synthesized result in the operation data storage 840 as well as returning the synthesized result to the remote operation processor 83. These operation data are transmitted to the client apparatus 20 of the first electronic whiteboard 2 serving as the host apparatus, and the client apparatuses 20 of the second electronic whiteboards 2 serving as the participation apparatuses, and the first electronic whiteboard 2 and the second electronic whiteboards 2 may display the images relating to the same operation data as a result.

**[Table 9]**

| **SEQ** | **OPERATION NAME** | **IP ADDRESS OF TRANSMISSION SOURCE: PORT NO.** | **IP ADDRESS OF TRANSMISSION DESTINATION: PORT NO.** | **OPERATION TYPE** | **OPERATION TARGET (PAGE DATA ID/ STROKE DATA ID)** | **DATA (STROKE DATA)** |
|---|---|---|---|---|---|---|
| 1 | ADD | 192.0.0.1:50001 | 192.0.0.1:50000 | STROKE | p005 | ▪▪▪▪▪ (STROKE DATA) |
| 2 | ADD | 192.0.0.1:50000 | 192.0.0.2:50001 | STROKE | p005 | ▪▪▪▪▪ (STROKE DATA) |
| 3 | UPDATE | 192.0.0.2:50001 | 192.0.0.1:50000 | STROKE | s006 | (50,40) |
| 4 | UPDATE | 192.0.0.1:50000 | 192.0.0.1:500001 | STROKE | s006 | (50,40) |
| 5 | DELETE | 192.0.0.2:50001 | 192.0.0.1:50000 | STROKE | s007 | - |
| 6 | DELETE | 192.0.0.1:50000 | 192.0.0.1:50001 | STROKE | s007 | - |
| 7 | ADD | 192.0.0.1:50001 | 192.0.0.1:50000 | PAGE | - | - |
| 8 | ADD | 192.0.0.1:50000 | 192.0.0.2:50001 | PAGE | - | - |
| 9 | ADD | 192.0.0.2:50001 | 192.0.0.1:50000 | IMAGE | p006 | abc.jpg |
| 10 | ADD | 192.0.0.1:50000 | 192.0.0.1:50001 | IMAGE | p006 | abc.jpg |
| ⋮ | ⋮ | ⋮ | ⋮ | ⋮ | ⋮ | ⋮ |

Table 9 schematically illustrates the operation data stored in the operation data storage 840. The operation data include items of SEQ (Sequence), an operation name of the operation data, an IP address of the electronic whiteboard 2 serving as a transmission source of the operation data (including a port number of the client apparatus or server apparatus), an IP address of the electronic whiteboard 2 serving as a transmission destination of the operation data (including a port number of the client apparatus or server apparatus), an operation type of the operation data, the operation target of the operation data, and data indicating the content of the operation data.

For example, a record of SEQ1 indicates that a stroke is plotted in the client apparatus 20 (Port No.: 50001) of the electronic whiteboard 2 (IP address: 192.0.0.1) serving as the host apparatus, and the operation data corresponding to the plotted stroke are transmitted to the server apparatus 90 of the electronic whiteboard 2 (IP address: 192.0.0.1) of the host apparatus. The operation type of this case is "STROKE", the operation target is "page data ID: p005", and the data indicating the content of the operation data are the data indicating "STROKE". Further, a record of SEQ2 indicates that the operation data are transmitted from the server apparatus 90 (Port No.: 50000) of the electronic whiteboard 2 (IP address: 192.0.0.1) serving as the host apparatus to the client apparatus 20 (Port No.: 50001) of a different electronic whiteboard 2 (IP address: 192.0.0.2) serving as the participation apparatus.

Note that since the operation synthesis processor 84 synthesizes the images in the order of inputting the operation data in this operation synthesis processor 84, the displays 3 of all the electronic whiteboards 2 currently performing the remote sharing process may display the stroke image (B) in the order of the strokes drawn by the users of the electronic whiteboards 2, unless the communications network 9 is congested.

The page processor 85 includes a function similar to the page processor 37 in the image processor 30 of the client apparatus 20, and is configured to store page data illustrated in Tables 1 to 3, and those illustrated in Figs. 6 and 7 in the page data storage 850. Note that the page data storage 850 serves as the same function as the page data storage 300 of the image processor 30, and duplicated illustration is omitted from the description.

### PROCESS AND OPERATION OF ELECTRONIC WHITEBOARD 2

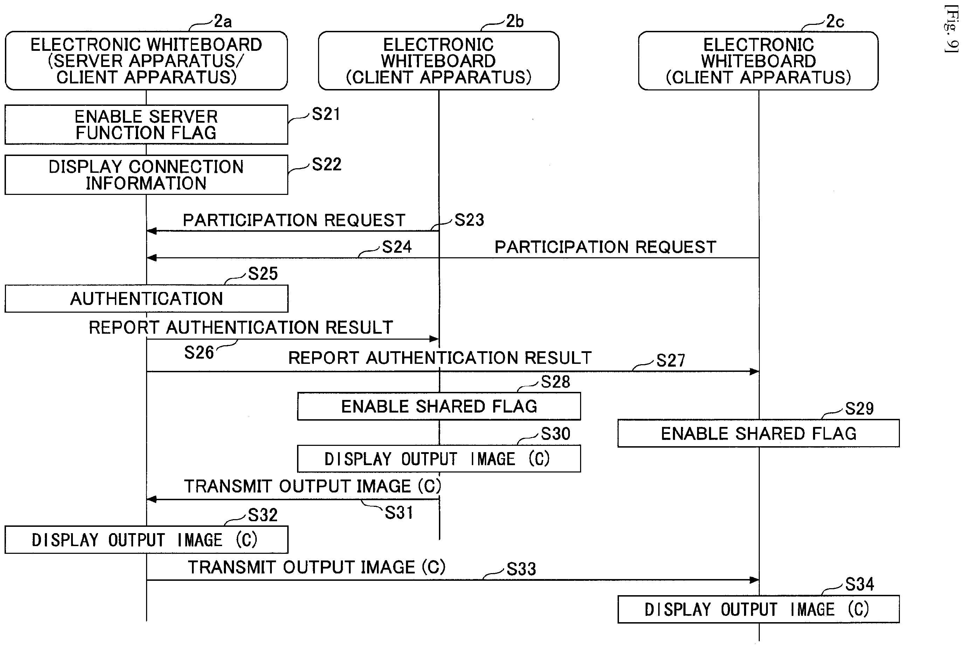

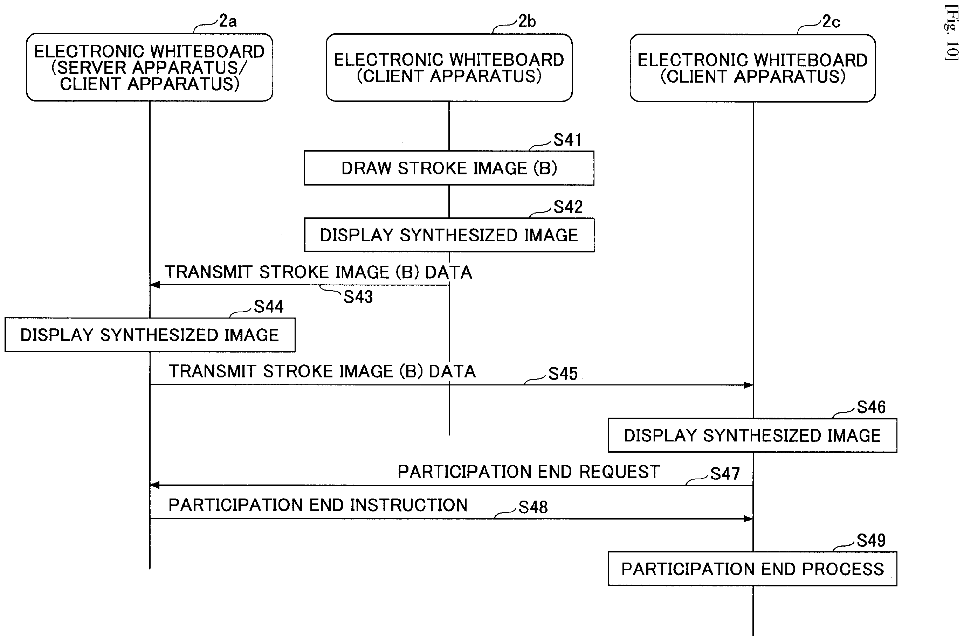

The following describes processes and operations of the embodiment with reference to Figs. 9 and 10. Figs. 9 and 10 are sequence diagrams illustrating examples of the respective electronic whiteboards 2a, 2b, and 2c.

The embodiment in Figs. 9 and 10 illustrates a case where the electronic whiteboard 2a serves as the host apparatus (the server apparatus 90 and the client apparatus 20) that hosts the remote sharing process. The electronic whiteboards 2b and 2c serve as the participation apparatuses (the client apparatuses 20) that participate in the remote sharing process. Initially, a description is given of a process of allowing the electronic whiteboards 2b and 2c to participate in the remote sharing process.

In step S21, the remote connection request receiver 71 in the server apparatus 90 of the electronic whiteboard 2a serving as the host apparatus receives a user's instruction to enable the server function from the remote process start processor 61 in the client apparatus 20 of the same electronic whiteboard 2a to enable a server function flag.

In step S22, the UI image generator 33 in the client apparatus 20 of the electronic whiteboard 2a generates connection information for establishing a connection to the electronic whiteboard 2a, and the image synthesizer 28 displays on the display 3a the connection information obtained from the UI image generator 33 via the display synthesizer 36. The connection information includes the IP address of the host apparatus, and a passcode generated for the remote sharing process of this time. The connection information is then transmitted to the users of the electronic whiteboards 2b and 2c by the user of electronic whiteboard 2a through telephone or email. Note that the connection information does not necessarily include the IP address of the host apparatus for the participation apparatus to transmit the participation request when there is the connecting destination management table 440.

In steps S23 and S24, the users of the electronic whiteboards 2b and 2c receives the input of the connection information, and the remote participation processors 62 in the client apparatuses 20 of the electronic whiteboards 2b and 2c transmit the respective passcodes to the remote connection request receiver 71 in the server apparatus 90 of the electronic whiteboard 2a via the communications network 9 based on the IP address of the connection information to transmit respective participation requests the remote connection request receiver 71 in the server apparatus 90 of the electronic whiteboard 2a.

In step S25, the remote operation connection processor 81 in the server apparatus 90 performs authentications on the passwords received from the client apparatuses 20 of the electronic whiteboards 2b and 2c with reference to the passcodes managed in the 810.

In steps S26 and S27, the remote connection result transmitter 72 reports respective authentication results to the client apparatuses 20 of the electronic whiteboards 2b and 2c.

In steps S28 and S29, when the electronic whiteboard 2 is determined as a valid electronic whiteboard 2 based on the authentications in step S25, the communications for the remote sharing process between the electronic whiteboard 2a serving as the host apparatus and the electronic whiteboards 2b and 2c serving as the participation apparatuses are established. The remote participation processors 62 in the client apparatuses 20 of the electronic whiteboards 2b and 2c enable sharing flags indicating the presence or the absence of the remote sharing process between each of the electronic whiteboards 2b and 2c and the electronic whiteboard 2a.

The following describes an output image (C) process in the remote sharing process. In step S30, the embodiment illustrated in Fig. 9 allows the image acquisition part 31 in the client apparatus 20 connected to the user's notebook PC 6b to generate image data of a display screen of the notebook PC 6b based on the images provided by the notebook PC 6b, and the image synthesizer 28 displays the image (the output image (C)) on the display 3b of the electronic whiteboard 2b.

In step S31, the remote image transmitter 63 in the client apparatus 20 of the electronic whiteboard 2b transmits the image data to the remote image receiver 73 in the server apparatus 90 of the electronic whiteboard 2a serving as the host apparatus.

In step S32, the image synthesizer 28 in the client apparatus 20 of the electronic whiteboard 2a displays on the display 3a the image data (the output image (C)) transmitted via the remote image processor 82 and the remote image transmitter 74 in the server apparatus 90, and the remote image receiver 64 and the display synthesizer 36 in the client apparatus 20.

In step S33, the remote image transmitter 74 in the server apparatus 90 of the electronic whiteboard 2a serving as the host apparatus transmits the image data to the remote image receiver 64 in the client apparatus 20 of the electronic whiteboard 2c other than the electronic whiteboard 2 that has provided the image data.

In step S34, the image synthesizer 28 in the client apparatus 20 of the electronic whiteboard 2c displays on the display 3c the image data (the output image (C)) transmitted via the remote image receiver 64 and the display synthesizer 36.

The following describes a stroke image (B) process in the remote sharing process. In step S41, the user draws a stroke image (B) on the electronic whiteboard 2b with the electronic pen 4b.

In step S42, the display synthesizer 36 in the client apparatus 20 of the electronic whiteboard 2b synthesizes the UI image (A), the output image (C) and the background image (D), and the stroke image (B), and the image synthesizer 28 displays the synthesized image (A, B, C, and D) on the display 3b of the electronic whiteboard 2b.

In step S43, the remote operation transmitter 65 in the client apparatus 20 of the electronic whiteboard 2b transmits the stroke image (B) to the remote operation receiver 75 in the server apparatus 90 of the electronic whiteboard 2a serving as the host apparatus.

In step S44, the operation synthesis processor 84 in the server apparatus 90 of the electronic whiteboard 2a synthesizes the operation data (illustration is given using the stroke image (B) alone in this case) transmitted via the remote operation receiver 75, and the remote operation processor 83 and returns the synthesized operation data to the remote operation processor 83. The stroke image (B) data are thus transmitted to the display synthesizer 36 in the client apparatus 20 of the electronic whiteboard 2a via the remote operation transmitter 76 in the server apparatus 90 of the electronic whiteboard 2a, and the remote operation receiver 66 in the client apparatus 20 of the electronic whiteboard 2a. The display synthesizer 36 then synthesizes the UI image (A), the output image (C) and the background image (D), and the stroke image (B). The image synthesizer 28 displays on the display 3a the synthesized image (A, B, C, and D) synthesized by the display synthesizer 36.

In step S45, the remote operation transmitter 76 in the server apparatus 90 of the electronic whiteboard 2a transmits the operation data (illustration is given using the stroke image (B) alone in this case) synthesized by the operation synthesis processor 84 to the remote operation receiver 66 in the client apparatus 20 of the electronic whiteboard 2c other than the electronic whiteboard 2b that has provided the stroke image (B) data.

In step S46, the display synthesizer 36 in the client apparatus 20 of the electronic whiteboard 2c generates the synthesized image (A, B, C, and D) in a manner similar to the step S43, and the image synthesizer 28 displays the synthesized image (A, B, C, and D) on the display 3c of the electronic whiteboard 2c.

The following describes a remote sharing process end process. The embodiment in Fig. 10 illustrates a process in which the electronic whiteboard 2c ends the participation.

In step S47, the remote participation processor 62 in the client apparatus 20 of the electronic whiteboard 2c transmits a participation end request to the remote connection request receiver 71 in the server apparatus 90 of the electronic whiteboard 2a serving as the host apparatus.

In step S48, the remote operation connection processor 81 in the server apparatus 90 of the electronic whiteboard 2 deletes the name of the location, in which the electronic whiteboard 2c has transmitted the participation end request and the IP address of the electronic whiteboard 2c, from the participation location management table 820, and the remote connection result transmitter 72 instructs the remote participation processor 62 in the client apparatus 20 of the electronic whiteboard 2c to end the participation.

In step S49, the remote participation processor 62 in the client apparatus 20 of the electronic whiteboard 2c disconnects the communications to end the participation.

Note that the embodiment illustrated in Figs. 9 and 10 allows the client apparatus 20 to provide image frames; however, the server apparatus 90 may transmit the image frames instead. The embodiment allows the client apparatus 20 that provides the image frames to transmit the stroke image (B); however, the different client apparatus 20 or the server apparatus 90 may transmit the stroke image (B) instead. The embodiment allows the client apparatus 20 that does not provide the image frames to transmit a positional specification event; however, the server apparatus 90 that does not provide the image frames may transmit such positional specification event instead.

### SYMBOL RECOGNITION PROCESS

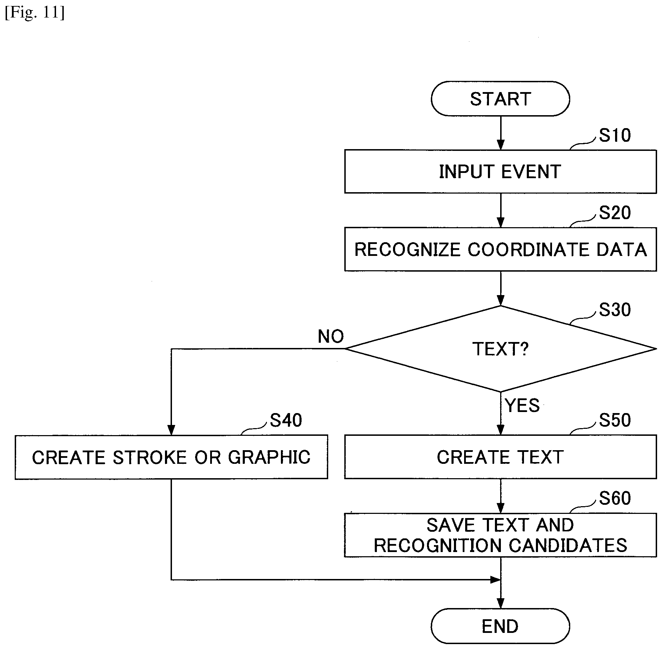

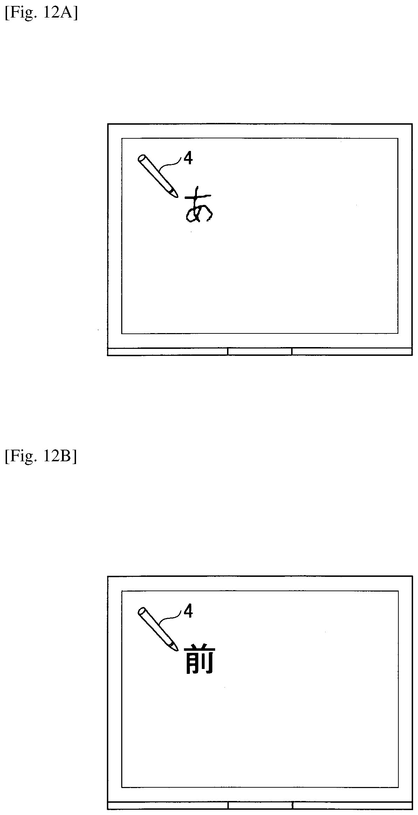

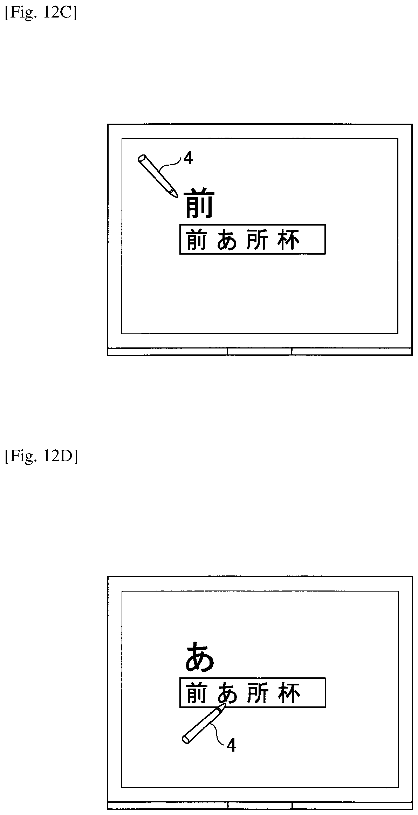

The following describes a symbol recognition process with reference to Fig. 11 and Figs. 12A to 12D. Fig. 11 illustrates a flowchart illustrating an example of a process in which the character recognizer 321 recognizes a symbol based on the coordinates of handwritten visual information, and Figs. 12A to 12D illustrate recognition results of respective symbols drawn on the display 3.

Initially, the stroke processor 32 acquires the coordinates of the visual information received by the event processor 25 as an event (step S10).

Subsequently, the character recognizer 321 analyzes the coordinates of the visual information (step S20).

The character recognizer 321 determines which of text, graphic (circle or square), or a stroke is drawn based on the analyzed result of the coordinates of the visual information (step S30). For example, the character recognizer 321 recognizes symbols, and determines the coordinates of the visual information that matches a certain symbol with predetermined reliability as the text. On the other hand, the character recognizer 321 recognizes graphics, and determines the coordinates of the visual information that matches a certain graphic with predetermined reliability as the graphic. The visual information coordinates of which match neither any symbol nor any graphic is determined as a stroke.

When the visual information is not text (NO in step S30), the stroke processor 32 plots a stroke or a graphic, and transmits the plotted stroke or graphic to the display synthesizer 36 (step S40). The stroke or the graphic is displayed in the stroke image (B) of Fig. 8.

When the visual information is text (YES in step S30), the character recognizer 321 creates text and recognition process candidates in a descending order from highest to lowest reliability (step S50). Note that the symbol recognition process may be conducted again in this step. The text is displayed in the stroke image (B) of Fig. 8.

The character recognizer 321 subsequently saves the text and recognition process candidates in memory such as the RAM 103, and transmits the text and the recognition process candidates to the display synthesizer 36 (step S60).

The display synthesizer 36 displays the text, stroke, and graphic on the display 3, and the display synthesizer 36 may display the text having the highest reliability when the user draws the text.

For example, the user handwrites a character 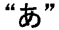 as illustrated in Fig. 12A, but the character recognizer 321 has recognized this character as 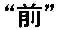 as illustrated in Fig. 12B. That is, the handwritten character 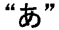 is misconverted. The embodiment stores in a recording medium recognition process candidates other than the character 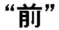 . The user may be able to select a correct recognition result later accordingly.

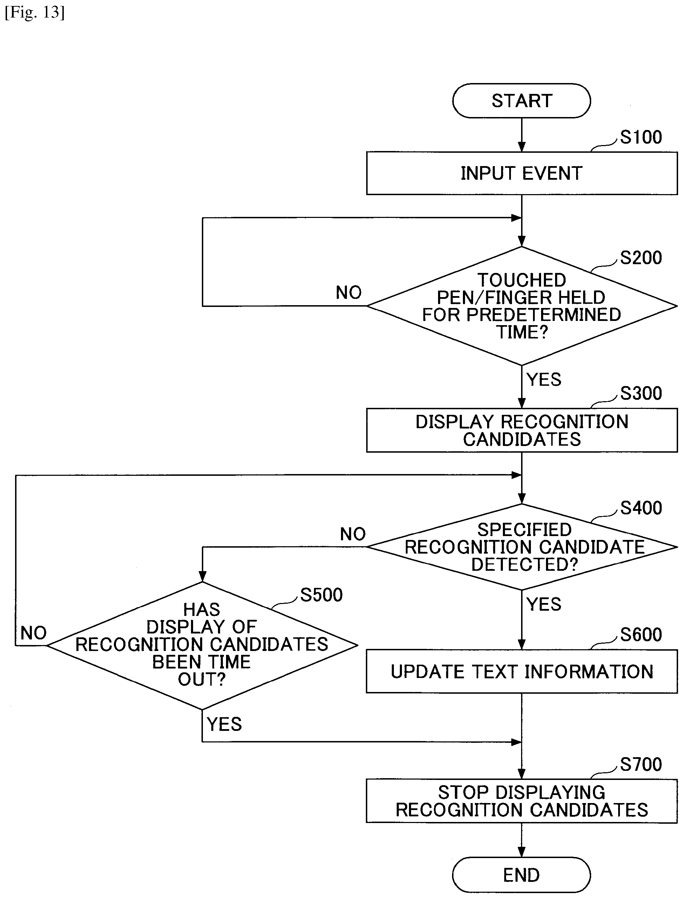

The following describes a change of the recognized symbol with reference to Fig. 13. Fig. 13 is a flowchart illustrating an example of a process in which the character recognizer 321 reconverts the text into one of the recognition process candidates.

Initially, the stroke processor 32 acquires coordinates from the event processor 25 as an event (step S100). When the user desires to correct the misconveted symbol as illustrated in Fig. 12C, the user touches the misconveted symbol with the electronic pen 4a or the like for a predetermined time. The recognition process candidates are displayed as a result.

Next, the stroke processor 32 analyzes the coordinates acquired from the event processor 25, and detects the electronic pen 4 being held on the text for a predetermined time (step S200).

When the electronic pen 4 is held for a predetermined time, the character recognizer 321 displays recognition process candidates (step S300). That is, the character recognizer 321 specifies the coordinates array data ID of the coordinates most analogous to the coordinates acquired from the coordinates array data in step S20, and specifies a symbol ID in association with that coordinates array data ID. The display 3 displays the recognition process candidates specified by the symbol ID from the symbol data.

The character recognizer 321 determines whether the user has selected one of the displayed recognition process candidates (step S400). The character recognizer 321 has already recognized the coordinates of each of the displayed recognition process candidates. The recognition process candidate selected by the user may be specified based on the coordinates transmitted by the event processor 25.

The character recognizer 321 starts a timer after having displayed the recognition process candidates. When none of the recognition process candidates is not selected, the character recognizer 321 determines whether the display of the recognition process candidates has timed out (step S500).

When a predetermined time has elapsed and the display has timed out (YES in step S500), the character recognizer 321 requests the display synthesizer 36 to stop displaying the recognition process candidates (step S700). When the user does not select any of the recognition process candidates within a predetermined time, the recognition process candidates may be stopped being displayed as described above.

When the user selects one of the recognition process candidates (YES in step S400), the character recognizer 321 determines the selected recognition process candidate as new text, and reports the new text to the display synthesizer 36 (step S600). The display synthesizer 36 stops displaying the displayed text, and starts displaying the new text on the display 3.

When the text displayed on the display 3 is updated, the character recognizer 321 requests the display synthesizer 36 to stop displaying the recognition process candidates (step S700).

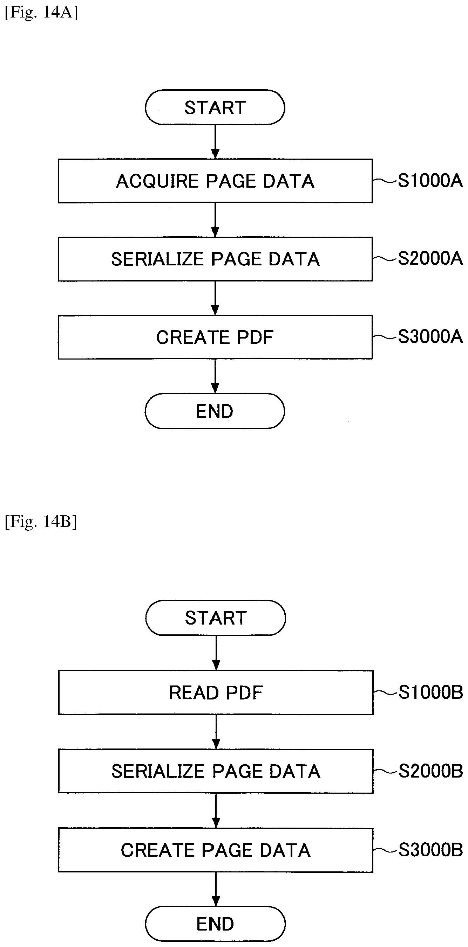

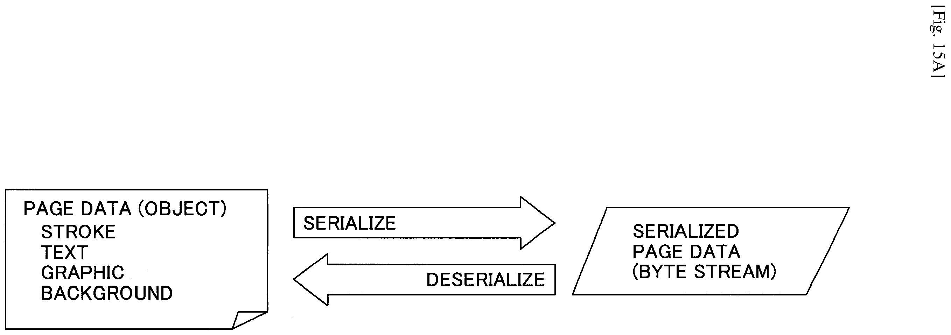

The following describes a process of saving page data in the page data storage 300 with reference to Fig. 14A. Fig. 14A is a flowchart illustrating an example of a process in which the page processor 37 stores page data in a page data storage 300 performed by a page processor. Figs. 15A to 15C are diagrams illustrating examples of serializing and other processes. The page data that have been created corresponding to one page may be stored in the page data storage 300.

The page processor 37 acquires strokes, text, graphics, and stamp information (start time, and end time) corresponding to one page from the stroke processor 32, and acquires a background image of the page from the background generator 34. (step S1000A).

The page processor 37 subsequently serializes the page data (step S2000A). The serializing process may be illustrated with reference to Fig. 15A. Serialized objects may be handled as one set of data.

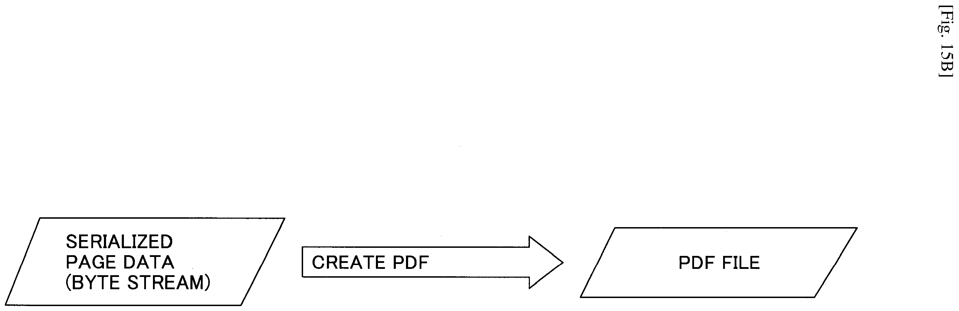

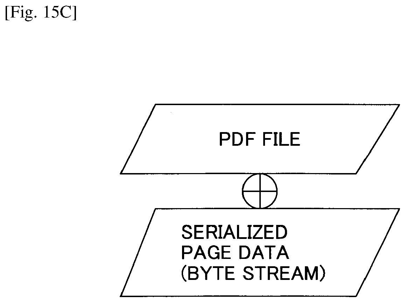

The page processor 37 subsequently creates a PDF file based on the serialized page data, and attaches the serialized data to the PDF file (step S3000A). The PDF file is created separately from the serialized page data as illustrated in Fig. 15B. The PDF file is provided with specification to attach different files separately, thus the page processor 37 may attach the serialized page data to the PDF file. The serialized page data are attached to the PDF file as illustrated in Fig. 15C. The page processor 37 may be able to acquire the serialized page data later by reading the PDF file as a result.

The PDF file directly created from the serialized page data will result in a text file. In this case, the electronic whiteboard 2 that reads the PDF file later will not be able to display images of the text, the strokes, and the graphics. By contrast, the electronic whiteboard 2 that reads the PDF file later may be able to acquire the serialized page data as they are from the PDF file with the serialized page data attached, and display the images of the text, the strokes, and the graphics.

A PDF file has high versatility, and may be suitable for attaching the serialized page data. However, a file to which the serialized page data are attached is not limited to the PDF file, and may be any other files insofar as such files are capable of attaching the serialized page data. An example of such a file may be an XPS (XML Paper Specification) file.

The following describes reuse of the serialized page data with reference to Fig. 14B. Fig. 14B is a flowchart illustrating an example of a process in which the page processor 37 deserializes the serialized page data. The process of Fig. 14B may be executed when the user performs an operation to display a previously created page on the display 3 or an operation to acquire page data from a different electronic whiteboard 2.

The page processor 37 reads the PDF file from the page data storage 300, and acquires serialized data attached to the PDF file (step S1000B).

The page processor 37 subsequently deserializes the serialized page data (step S2000B). The page processor 37 may be able to restore the objects (the strokes, the text including the recognition process candidates, the graphics, and the background image), and convert the objects into the original page data.

The page processor 37 loads the page data in memory such as the RAM 103 (step S3000B). The display synthesizer 36 may be able to display the page data on the display 3 as a result.

### SERIALIZING AND DESERIALIZING

Fig. 15A is a diagram illustrating an example of serializing and deserializing processes. The serializing process indicates converting an internal state of an object into a byte stream. The deserializing process indicates reproducing an object the same as the original object from the byte stream.

The embodiment includes the page data as the object, and the page data may include the strokes, the text including recognition process candidates, the graphics, and the background image, for example. The electronic whiteboard 2 defines these strokes, the text including recognition process candidates, the graphics, and the background image as data handled by the programs. These data may thus be difficult to be saved as they are. The serializing process is a process of converting the data handled by the programs into a file format to save the data as files.

The deserializing process is a process of converting the serialized data capable of being saved as files into the original data handled by the programs.

Hence, the page data that are serialized and converted into one byte stream may be saved, and the page data that have been converted into the byte stream and saved may be restored to the data originally handled by the programs. For example, when the electronic whiteboard 2 deserializes the page data, a state of immediately after the electronic whiteboard 2 has recognized a symbol may be restored.

The embodiment serializes the strokes, the text including the recognition process candidates, the graphics, and the background image, and converts the serialized data into one byte stream. Since the text includes the recognition process candidates, serializing the above data enables the byte stream to include the recognition process candidates in addition to the text.

The byte stream is attached to the PDF file as described above, which is then saved in the page data storage 300. The above byte stream that has been saved into a desired recording medium may be loaded by the electronic whiteboard 2 into the RAM 103, and the recognition process candidates may be displayed again.

The electronic whiteboard 2 of the embodiment may serialize the recognition process candidates and save the serialized recognition process candidates in the PDF file. Hence, the user may be able to cause the electronic whiteboard 2 to display, after saving the text into the desired recording medium, the recognition process candidates, and select a desired one of the recognition process candidates. That is, the text once recognized from the handwritten state may be selectable again from the recognition process candidates.

### PREFERRED MODIFICATION

The preferred embodiments and examples are described above; however, the present invention is not limited to those embodiments and examples. Various alteration and modification may be made within the scope without departing from the gist of the present invention. The invention is defined by the appended claims.

For example, the display 3 of the electronic whiteboard 2 is not limited to a flat panel display. The display 3 may be formed of an image projected by a projector. In this case, the coordinates of the hand H or the coordinates of the electronic pen 4 may be acquired by a camera or the like, or may be acquired based on the time difference between arrival times of the ultrasonic waves generated by the electronic pen 4 obtained at different measuring points.

Further, Fig. 1 depicts the TV conference terminal 7 as a different apparatus separately from the electronic whiteboard 2. However, the electronic whiteboard 2 may alternatively incorporate the function of the TV conference terminal 7. That is, the electronic whiteboard 2 may include a camera function, and may display an image taken by the camera function on the display 3 or transmit the image to a different electronic whiteboard 2.

The electronic whiteboard 2 of the embodiment performs symbol recognition and symbol reconversion; however, the symbol recognition and symbol reconversion may be performed by a different information processing apparatus having no electronic whiteboard 2 function.

### Advantageous Effect of the Invention

The embodiments may provide an information processing apparatus capable of storing conversion candidates of handwritten information into a desired recording medium.

### Reference Signs List

- 1: image processing system
- 2: electronic whiteboard
- 3: display
- 4: electronic pen
- 6: notebook PC
- 7: TV conference terminal
- 20: client apparatus
- 25: event processor
- 32: stroke processor
- 36: display synthesizer
- 37: page processor
- 90: server apparatus
- 321: character recognizer

The present application is based on and claims the benefit of priority of Japanese Priority Application No. 2015-017647 filed on January 30, 2015,

## Claims

1. An information processing apparatus displaying information on a display apparatus, the information processing apparatus comprising:
a memory;
a storage; and
a processor coupled to the memory,
wherein the processor
detects a specified position on a display surface of the displaying apparatus, generates visual information based on the detected specified position, recognizes a symbol, including at least one of a character, a numerical value, a graphic, a stroke and a special symbol, formed of one or more visual information items generated by the processor, and determines a plurality of recognition process candidates in association with the symbol, and converts serialized data created by serializing the symbol, the recognition process candidates, the stroke and the graphic data into a portable document format (PDF) file, and wherein the processor
saves the PDF file with the serialized data attached in the storage, and the processor obtains the attached serialized data from the PDF file and displays the recognition progress candidates, and prompts a user to reselect from among the displayed recognition process candidates.

2. A program for causing an information processing apparatus to display information on a display apparatus, the information processing apparatus comprising
a memory;
a storage; and
a processor coupled to the memory,
wherein the program causes the processor to detect a specified position on a display surface of the display apparatus, to generate visual information based on the detected specified position, to recognize a symbol, including at least one of a character, a numerical value, a graphic, a stroke and a special symbol, formed of one or more visual information items generated by the processor, and determine a plurality of recognition process candidates in association with the symbol, and to convert serialized data created by serializing the symbol, the recognition process candidates, the stroke, and the graphic data into a portable document format (PDE) file, and
wherein the program causes the processor to save the PDF file with the serialized data attached in the storage, and to obtain the attached serialized data from the PDF file and to display the recognition progress candidates, and to prompt a user to reselect from among the displayed recognition process candidates.

## Patentansprüche

1. Informationsverarbeitungsapparat, der Informationen auf einem Anzeigeapparat anzeigt, wobei der Informationsverarbeitungsapparat enthält:
einen Speicher;
eine Ablageeinheit; und
einen mit dem Speicher gekoppelten Prozessor,
wobei der Prozessor
eine spezifizierte Position auf einer Anzeigeoberfläche des Anzeigeapparats detektiert, visuelle Informationen basierend auf der detektierten spezifizierten Position erzeugt, ein Symbol erkennt, das wenigstens eines von einem Schriftzeichen, einem nummerischen Wert, einer Grafik, einem Handstreich und einem besonderen Symbol, das aus einem oder mehreren visuellen Informationsstücken, die von dem Prozessor erzeugt worden sind, gebildet ist, und eine Mehrzahl von Erkennungsprozesskandidaten in Verbindung mit dem Symbol ermittelt und Seriendaten, die durch ein Verbringen des Symbols in eine serielle Reihenfolge erzeugt worden sind, die Erkennungsprozesskandidaten, den Handstreich und die Grafikdaten in eine Datei mit portablem Dokumentformat (PDF) umwandelt, und wobei der Prozessor
die PDF-Dateien mit den angehängten Seriendaten in der Ablageeinheit speichert und der Prozessor die angehängten Seriendaten aus der PDF-Datei erhält und die Erkennungsprozesskandidaten anzeigt und einen Benutzer dazu veranlasst, aus den angezeigten Erkennungsprozesskandidaten wieder auszuwählen.

2. Programm zum Veranlassen eines Informationsverarbeitungsapparats zum Anzeigen von Informationen auf einem Anzeigeapparat, wobei der Informationsverarbeitungsapparat enthält
einen Speicher;
eine Ablageeinheit; und
einen mit dem Speicher gekoppelten Prozessor,
wobei das Programm den Prozessor dazu veranlasst, eine spezifizierte Position auf einer Anzeigeoberfläche des Anzeigeapparats zu detektieren, visuelle Informationen basierend auf der detektieren spezifizierten Position zu erzeugen, ein Symbol zu erkennen, das wenigstens eines aus einem Schriftzeichen, einem nummerischen Wert, einer Grafik, einem Handstreich und einem besonderen Symbol, das aus einem oder mehreren visuellen Informationsstücken, die von dem Prozessor erzeugt worden sind, gebildet ist, und eine Mehrzahl von Erkennungsprozesskandidaten in Zusammenhang mit dem Symbol zu ermitteln und Seriendaten, die durch Verbringen des Symbols, der Erkennungsprozesskandidaten, des Handstreiches und der Grafikdaten in einer seriellen Reihenfolge erzeugt worden sind, in eine Datei mit portablem Dokumentformat (PDF) umzuwandeln, und
wobei das Programm den Prozessor dazu veranlasst die PDF-Datei mit den angehängten Seriendaten in der Ablageeinheit zu speichern und die angehängten Seriendaten aus der PDF-Datei zu erhalten und die Erkennungsprozesskandidaten anzuzeigen und einen Benutzer dazu veranlassen, aus den angezeigten Erkennungsprozessdaten wieder auszuwählen.

## Revendications

1. Appareil de traitement d'informations affichant des informations sur un appareil d'affichage, l'appareil de traitement d'informations comprenant :
une mémoire ;
un stockage ; et
un processeur couplé à la mémoire, dans lequel le processeur détecte une position spécifiée sur une surface d'affichage de l'appareil d'affichage, génère des informations visuelles sur la base de la position spécifiée détectée, reconnaît un symbole, incluant au moins un d'un caractère, d'une valeur numérique, d'un graphique, d'un trait et d'un symbole spécial, formé d'un ou de plusieurs des éléments d'informations visuelles générés par le processeur, et détermine une pluralité de candidats de processus de reconnaissance en association avec le symbole, et convertit des données sérialisées créées en sérialisant le symbole, les candidats de processus de reconnaissance, le trait, et les données graphiques dans un fichier de format de document portable (PDF), et dans lequel le processeur sauvegarde le fichier PDF, avec les données sérialisées attachées, dans le stockage, et le processeur obtient les données sérialisées attachées à partir du fichier PDF et affiche les candidats de progrès de reconnaissance, et invite un utilisateur à effectuer une resélection parmi les candidats de processus de reconnaissance affichés.

2. Programme pour faire en sorte qu'un appareil de traitement d'informations affiche des informations sur un appareil d'affichage, l'appareil de traitement d'informations comprenant
une mémoire ;
un stockage ; et
un processeur couplé à la mémoire,
dans lequel le programme fait en sorte que le processeur détecte une position spécifiée sur une surface d'affichage de l'écran d'affichage appareil, génère des informations visuelles sur la base de la position spécifiée détectée, reconnaisse un symbole, incluant au moins un d'un caractère, d'une valeur numérique, d'un graphique, d'un trait et d'un symbole spécial, formé d'un ou de plusieurs des éléments d'informations visuelles générés par le processeur, et détermine une pluralité de candidats de processus de reconnaissance en association avec le symbole, et convertisse des données sérialisées créées en sérialisant le symbole, les candidats de processus de reconnaissance, le trait, et les données de graphique dans un fichier de format de document portable (PDF), et
dans lequel le programme fait en sorte que le processeur sauvegarde le fichier PDF, avec les données sérialisées attachées, dans le stockage, et obtienne les données sérialisées attachées à partir du fichier PDF et affiche les candidats de progrès de reconnaissance, et invite un utilisateur à effectuer une resélection parmi les candidats de processus de reconnaissance affichés.
